# EUROPÄISCHE PATENTSCHRIFT

(11) **EP 0 908 071 B1**
(45) Veröffentlichungstag und Bekanntmachung des Hinweises auf die Patenterteilung: **06.10.2004**
(21) Anmeldenummer: 97930303.9
(22) Anmeldetag: 06.06.1997
(51) Int. Cl.: H04Q 7/38

(54) **VERFAHREN ZUM STEUERN DES AUFBAUS UND DER NUTZUNG VON ÜBERTRAGUNGSWEGEN (BEARER) IN DRAHTLOSEN TELEKOMMUNIKATIONSSYSTEMEN, INSBESONDERE IN EINEM ALS LOKALE NACHRICHTENÜBERTRAGUNGSSCHLEIFE IN EINEM ISDN-SYSTEM EINGEBUNDENEN DECT-SPEZIFISCHEN RLL/WLL-SYSTEM**
PROCESS FOR CONTROLLING THE ESTABLISHMENT AND OPERATION OF PATHS OF TRANSMISSION (BEARERS) IN A WIRELESS TELECOMMUNICATION SYSTEM, IN PARTICULAR IN A DECT-SPECIFIC RLL/WLL-SYSTEM BOUND INTO AN ISDN-SYSTEM AS A LOCAL INFORMATION TRANSMISSION LOOP
PROCEDE DE COMMANDE DE L'ETABLISSEMENT ET DE L'EXPLOITATION DE VOIES DE TRANSMISSION (SUPPORTS) DANS DES SYSTEMES DE TELECOMMUNICATIONS RADIOTELEPHONIQUES, NOTAMMENT DANS UN SYSTEME RLL/WLL DE TYPE DECT QUI FORME UNE BOUCLE LOCALE DE TRANSMISSION D'INFORMATIONS LIEE A UN SYSTEME RNIS

(30) Priorität: 24.06.1996 DE 19625161
(43) Veröffentlichungstag der Anmeldung: 14.04.1999
(73) Patentinhaber: SIEMENS AKTIENGESELLSCHAFT, 80333 München (DE)
(72) Erfinder: KORDSMEYER, Martin, D-48477 Hörstel (DE)
(86) Internationale Anmeldenummer: PCT/DE1997/001144
(87) Internationale Veröffentlichungsnummer: WO 1997/050273

(56) Entgegenhaltungen:
- EP-A- 0 415 502
- WO-A-93/21719
- DE-A- 19 625 141
- US-A- 5 181 199

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtgebunden ist oder auf der Basis von diversen Nachrichtenübertragungsverfahren FDMA (**F**requency **D**ivision **M**ultiple **A**ccess), TDMA (**T**ime **D**ivision **M**ultiple **A**ccess)
   und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al:"Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht
(1) in Form eines Bildes,
(2) als gesprochenes Wort,
(3) als geschriebenes Wort,
(4) als verschlüsseltes Wort oder Bild
übertragen werden. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren zum Steuern des Aufbaus von Übertragungswegen (Bearer) in drahtlosen Telekommunikationssystemen, insbesondere in einem als lokale Nachrichtenübertragungsschleife in einem ISDN-System eingebundenen DECT-spezifischen RLL/WLL-System (Radio Local **L**oop/**W**ireless **L**ocal **L**oop) - gemäß dem Oberbegriff des Patentanspruches 1.

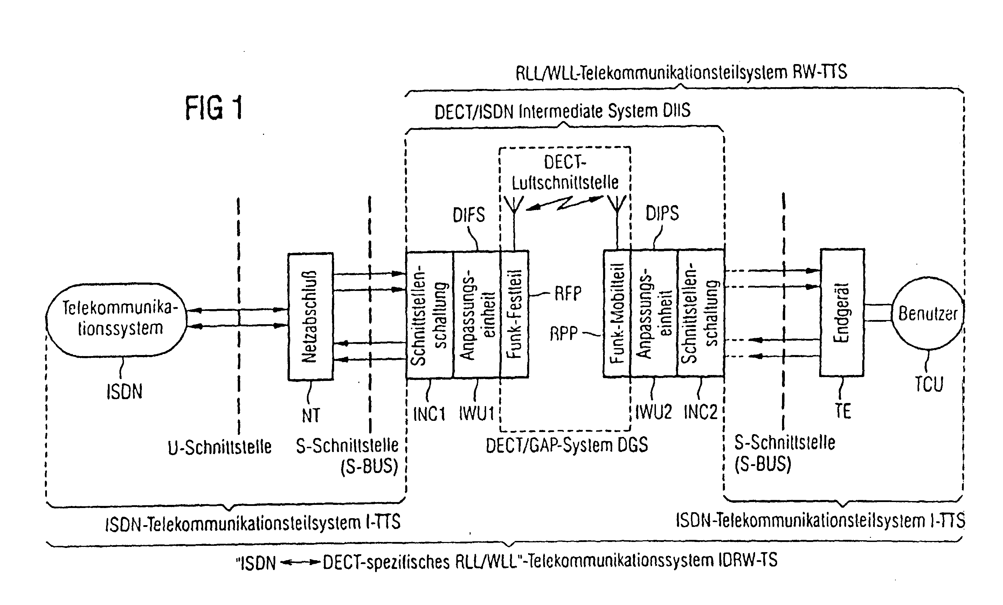

FIGUR 1 zeigt ausgehend von den Druckschriften "*Nachrichtentechnik Elektronik, Berlin 45 (1995) Heft 1, Seiten 21 bis 23 und Heft 3 Seiten 29 und 30" sowie IEE Colloquium 1993, 173; (1993), Seiten 29*/*1 - 29*/*7; W. Hing, F. Halsall:"Cordless access to the ISDN basic rate service" auf der Basis eines* **D**ECT/**I**SDN **I**ntermediate **S**ystems DIIS gemäß der *ETSI-Publikation prETS 300xxx, Version 1.10, September 1996* ein **"I**SDN ↔ **D**ECT-spezifisches **R**LL/**W**LL"-**T**elekommunikations**s**ystem IDRW-TS(**I**ntegrated **S**ervices **D**igital **N**etwork ↔ **R**adio in the **L**ocal **L**oop/**W**ireless in the **L**ocal **L**oop) mit einem ISDN-Telekommunikations**t**eil**s**ystem I-TTS [*vgl. Druckschrift "Nachrichtentechnik Elektronik, Berlin 41-43, **T**eil: 1 bis 10,* ***T****1: (1991) Heft 3, Seiten 99 bis 102;* ***T****2: (1991) Heft 4, Seiten 138 bis 143;* ***T****3: (1991) Heft 5, Seiten 179 bis 182 und Heft 6, Seiten 219 bis 220; **T**4: (1991) Heft 6*, *Seiten 220 bis 222 und (1992) Heft 1, Seiten 19 bis 20;* ***T****5: (1992) Heft 2, Seiten 59 bis 62 und (1992) Heft 3, Seiten 99 bis 102;* ***T****6: (1992) Heft 4, Seiten 150 bis 153;* ***T****7: (1992) Heft 6, Seiten 238 bis 241;* ***T****8: (1993) Heft 1, Seiten 29 bis 33; **T**9: (1993) Heft 2, Seiten 95 bis 97 und (1993) Heft 3, Seiten 129 bis 135;* ***T****10: (1993)* *Heft 4, Seiten 187 bis 190;*"] und einem DECT-spezifischen **R**LL/**W**LL-**T**elekommunikations**t**eil**s**ystem RW-TTS.

Das DECT/ISDN Intermediate System DIIS bzw. das RLL/WLL-Telekommunikationsteilsystem RW-TTS basiert dabei vorzugsweise auf ein **D**ECT/**G**AP-**S**ystem DGS [**D**igital **E**nhanced (früher: **E**uropean) **C**ordless **T**elecommunication; vgl. **(1):** Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Okt. 1992; **(2):** Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3)**: tec 2/93 - Das technische Magazin von Ascom "Wege zur universellen mobilen Telekommunikation", Seiten 35 bis 42; **(4):** Philips Telecommunication Review Vol. 49, No. 3, Sept. 1991, R.J. Mulder:" DECT, a universal cordless access system"; **(5):** WO 93/21719 (FIG 1 bis 3 mit dazugehöriger Beschreibung)]. Der GAP-Standard (**G**eneric **A**ccess **P**rofile) ist eine Untermenge des DECT-Standards, dem die Aufgabe zukommt, die Interoperabilität der DECT-Luftschnittstelle für Telefonanwendungen sicherzustellen *(vgl. ETSI-Publikation prETS 300444, April 1995).*

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann:"Der GSM-Standard - Grundlage für digitale europäische Mobilfunknetze", Seiten 137 bis 152). Stattdessen ist es im Rahmen eines hybriden Telekommunikationssystems auch möglich, daß das ISDN-Telekommunikationsteilsystem I-TTS als GSM-System ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z.B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z.B. unter der Einbindung des DECT-Systems DS dem ISDN-Teilnehmer ISDN-Dienste an Standard-ISDN-Schnittstellen verfügbar gemacht werden (vgl. FIGUR 1).

In dem "ISDN ↔ DECT-spezifischen RLL/WLL"-Telekommunikationssystem IDRW-TS nach FIGUR 1 ist ein Telekommunikationsteilnehmer (Benutzer) TCU (**T**ele-**C**ommunication **U**ser) mit seinem Endgerät TE (**T**erminal **E**ndpoint; **T**erminal **E**quipment) z. B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystem RW-TTS enthaltene - DECT/ISDN Intermediate System DIIS (erstes Telekommunikationsteilsystem), eine weitere standardisierte S-Schnittstelle (S-BUS), einen Netzabschluß NT (**N**etwork **T**ermination) und eine standardisierte U-Schnittstelle des ISDN-Telekommunikationsteilystems) I-TTS (zweites Telekommunikationsteilsystem) in die ISDN-Welt mit den darin verfügbaren Diensten eingebunden.

Das erste Telekommunikationsteilsystem DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das erste Telekommunikationsteilsystem DIFS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

Für ein DECT-spezifisches RLL-System als Träger für möglichst alle ISDN-Dienste im Teilnehmer-Anschluß bestehen dabei folgende allgemeinen Problemstellungen:
a) Nachbildung der ISDN-Kanal-Struktur (D-Kanal und 2 B-Kanäle), im folgenden insbesondere des D-Kanals,
b) gute Bandbreite-Ökonomie; für ISDN besonders bedeutsam, da einige Dienste bereits zwei DECT-Kanäle für die B-Kanal-Datenrate von 64 kbps benötigen,
c) minimaler technischer Aufwand.

### Nachbildung des D-Kanals

### Eigenschaften des D-Kanals:

- Gemeinsamer Signalisierungskanal auf der C-Ebene (C-plane) für alle an den ISDN-Anschluß angeschlossenen Endgeräte TE (**T**erminal **E**ndpoint).
- Die TE-spezifischen Signalisierungskanäle zum Netz werden
- darin durch TE-individuelle Adressen TEI (**T**erminal **E**ndpoint **I**dentifier) separiert.
   Der Zugriffsmechanismus zum D-Kanal stellt TE-individuell die Reihenfolge der Nachrichten sicher.
- Durchsatzrate: 16 kbps
- Auslastung: abhängig von vielen Kriterien, in der Regel niedriger als Maximalkapazität; Stausituationen möglich, die jedoch wegen der hohen Kapazität schnell abbaubar sind.

### DECT-Kanäle:

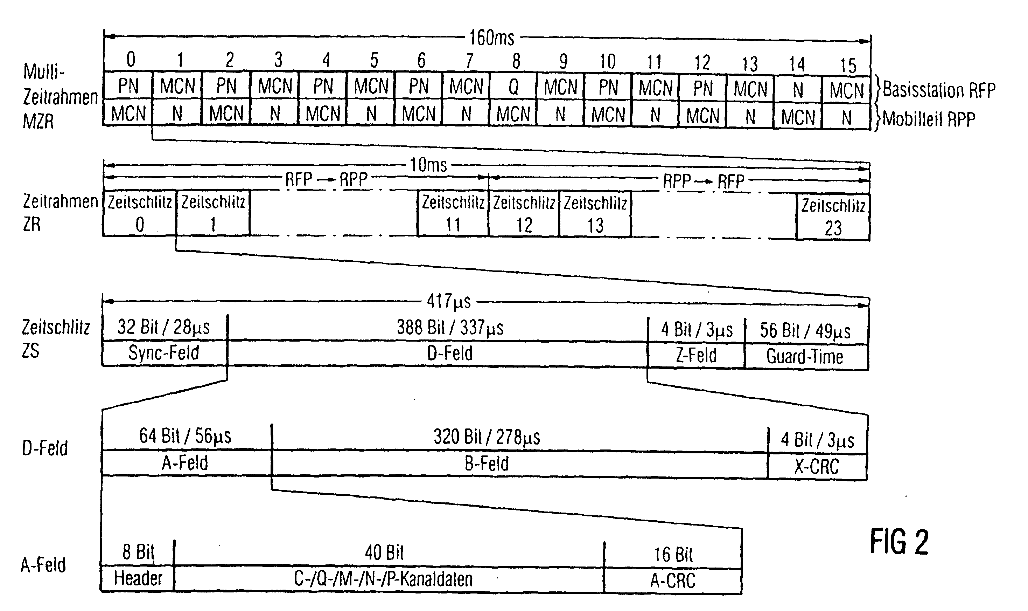

FIGUR 2 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems DGS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 2 in einer vorgegebenen zeitlichen Abfolge von der Basisstation RFP zum Mobilteil RPP und vom Mobilteil RPP zur Basisstation RFP (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation RFP und Mobilteil RPP getrennt Informationen übertragen, die einen im DECT-Standard definierten C-,M-,N-,P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation RFP → Mobilteil RPP" und weitere 12 Zeitschlitze ZS (Zeitschlitze 12 ... 23) für die Übertragungsrichtung "Mobilteil RPP → Basisstation RFP" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

### Eigenschaften:

- Verwendung von TDMA-Zeitschlitzen.
- Im Prinzip wird je Zeitschlitz ein Cₛ-Kanal (s = slow) zur Signalisierung [C-Ebene (C-plane) im DECT-Standard] und ein zugeordneter Kanal [U-Ebene (U-plane) im DECT-Standard] für die Benutzer- bzw. Nutzinformationen (Durchsatz: 32 kbps) verwendet.
- Durchsatz des Cₛ-Kanals: 2 kbps.

Der DECT-Standard bietet auch andere Kanalstrukturen, z. B. einen C_{f}-Kanal (f = fast) an.
- Der C_{f}-Kanal belegt einen Zeitschlitz.
- Durchsatz des C_{f}-Kanals: 25.6 kbps.

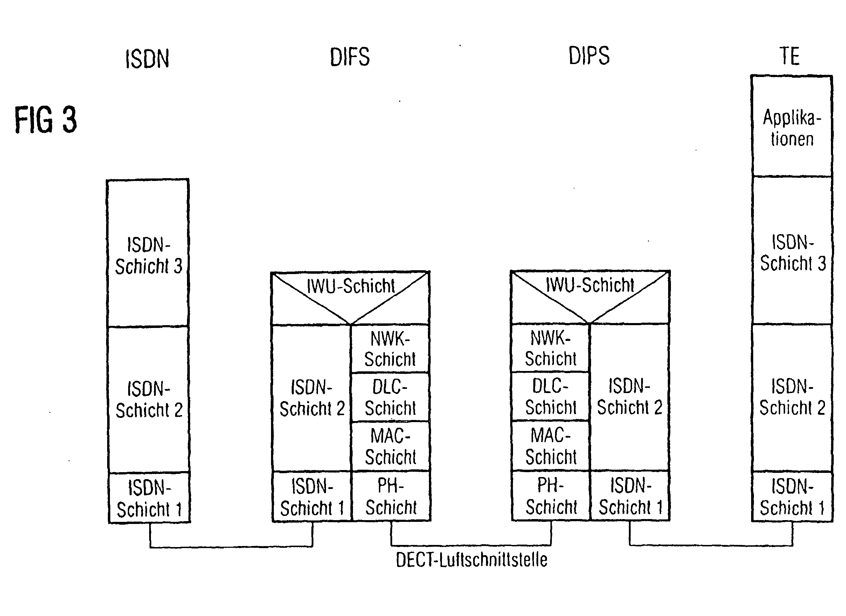

Figur 3 zeigt auf der Basis des OSI/ISO-Schichtenmodells [vgl. **(1):** Unterrichtsblätter - Deutsche Telekom Jg. 48, 2/1995, Seiten 102 bis 111; **(2):** ETSI-Publikation ETS 300175-1..9, Oktober 1992; **(3)**: ETSI-Publikation ETS 300102, Februar 1992; **(4):** ETSI-Publikation ETS 300125, September 1991; (**5):** ETSI-Publikation ETS 300012, April 1992] ein Modell der C-Ebene des "ISDN ↔ DECT-spezifischen RLL/WLL"-Telekommunikationssystems IDRW-TS nach FIGUR 1.

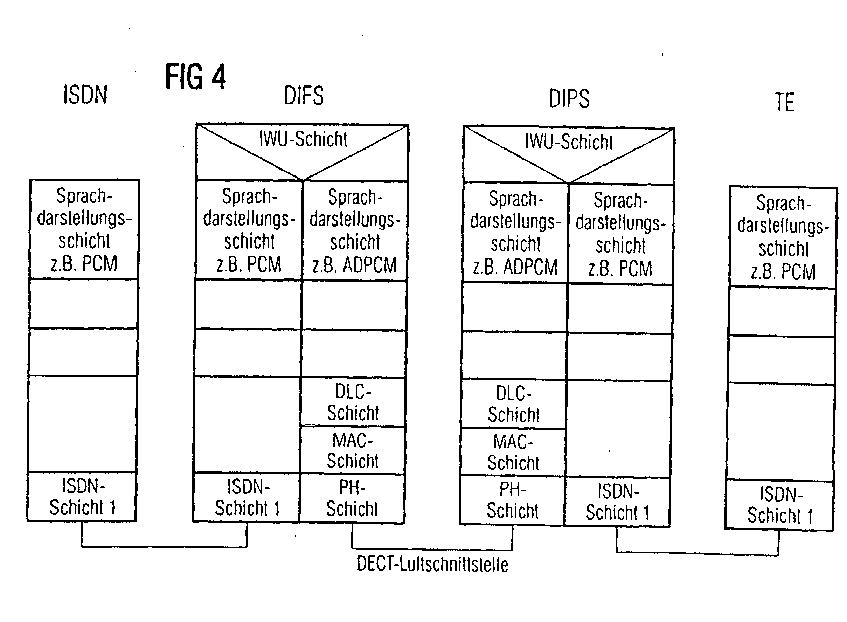

Figur 4 zeigt auf der Basis des OSI/ISO-Schichtenmodells [vgl. **(1):** Unterrichtsblätter - Deutsche Telekom Jg. 48, 2/1995, Seiten 102 bis 111; **(2):** ETSI-Publikation ETS 300175-1..9, Oktober 1992; **(3)**: ETSI-Publikation ETS 300102, Februar 1992; **(4):** ETSI-Publikation ETS 300125, September 1991; **(5)**: ETSI-Publikation ETS 300012, April 1992] ein Modell der U-Ebene für Sprachdatenübertragung des "ISDN ↔ DECT-spezifischen RLL/WLL"-Telekommunikationssystems IDRW-TS nach FIGUR 1.

### Bandbreite-Ökonomie

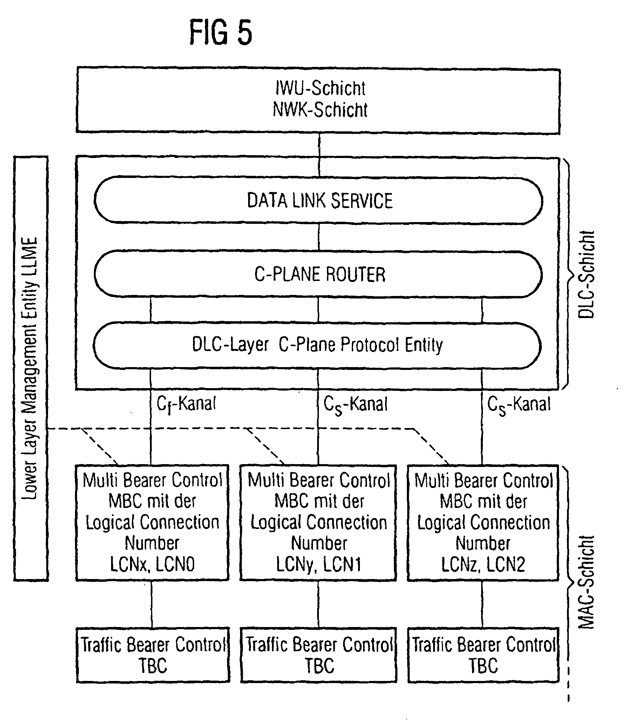

Die Cₛ-Kanalstruktur bietet für eine Standard-Sprachverbindung eine optimale Bandbreite-Ökonomie, da gemäß FIGUR 5 ausgehend von FIGUR 3 und 4 sowie unter Berücksichtigung der ETSI-Publikationen (ETS 300175-1, 10/1992, Kap. 7; ETS 300175-3, 10/1992, Kap. 4.1; ETS 300175-4, 10/1992, Kap. 4) nur ein Übertragungsweg (Bearer) - z.B. MBC mit der LCNy, LCN1 nach FIGUR 5 - bzw. eine Verbindung oder ein Zeitschlitz benötigt wird.

Die Verwendung des C_{f}-Kanals führt gemäß FIGUR 5 ausgehend von FIGUR 3 und 4 sowie unter Berücksichtigung der ETSI-Publikationen (ETS 300175-1, 10/1992, Kap. 7; ETS 300175-3, 10/1992, Kap. 4.1; ETS 300175-4, 10/1992, Kap. 4) zu einer geringerer Bandbreite-Ökonomie, da die U-Ebene (U-plane) selbst einen weiteren Übertragungsweg (Bearer) bzw. eine weitere Verbindung oder einen weiteren Zeitschlitz benötigt; d.h. es sind zwei Übertragungswege (Bearer) - z.B. MBC mit der LCN2,LCNz und MBC mit der LCNy, LCN1 nach FIGUR 5 - bzw. zwei Verbindung oder zwei Zeitschlitze für eine einfache Sprachverbindung notwendig.

Darüber hinaus sind für den Fall, daß zwei ISDN-B-Kanal-Verbindungen (Sprachverbindungen) bestehen, drei Übertragungswege (Bearer) - z.B. MBC mit der LCNx, LCN0, MBC mit der LCNy, LCN1 und MBC mit der LCNz, LCN2 nach FIGUR 5 - bzw. drei Verbindung oder drei Zeitschlitze erforderlich.

Während aus der Sicht der Kanalkapazität die Verwendung des C_{f}-Kanals zweckmäßig zu sein scheint, ist aus der Sicht der Bandbreite-Ökonomie die Verwendung des Cₛ-Kanals zweckmäßig.

Die der Erfindung zugrundeliegende Aufgabe besteht darin, in drahtlosen Telekommunikationssystemen, insbesondere in einem als lokale Nachrichtenübertragungsschleife in einem ISDN-System eingebundenen DECT-spezifischen RLL/WLL-System, den Aufbau und die Nutzung von Übertragungswegen bezüglich der Anzahl der Übertragungswege zur drahtlosen Nachrichtenübertragung zu optimieren.

Diese Aufgabe wird ausgehend von dem in dem Oberbegriff des Patentanspruches 1 definierten Verfahren durch die in dem Kennzeichen des Patentanspruches 1 angegebenen Merkmale gelöst.

Die der Erfindung zugrundeliegende Idee besteht darin, den Aufbau und die Nutzung von Übertragungswegen (Bearer) zwischen Funksende-/Funkempfangseinrichtungen in drahtlosen Telekommunikationssystemen der eingangs genannten und umrissenen Art durch Vergabe von Übertragungswegenummern an die Übertragungswege so zu steuern, daß eine Kollision beim Aufbau und der Nutzung der Übertragungswege (Verbindungen) vermieden wird und gleichzeitig die Ressourcen der Luftschnittstelle effizient ausgenutzt werden. Dadurch wird der Aufwand in den Telekommunikationssystemen und die Fehleranfälligkeit beim Verbindungsaufbau (Aufbau der Übertragungswege) minimiert.

Dies wird gemäß Anspruch 1 durch eine Steuerung von Übertragungswegnummern erreicht.

Nach Anspruch 2 ist es vorteilhaft, wenn die die Kollision vermeidende Übertragungswegnummer für einen Übertragungsweg zur Übertragung von Systemnachrichten in einem Übertragungskanal mit einer kanalspezifischen Übertragungskapazität reserviert wird.

Nach Anspruch 3 ist es vorteilhaft, daß mit der angegebenen Steuerung der Übertragungswegnummern ein Kanalwechsel gesteuert werden kann.

Nach Anspruch 6 ist es vorteilhaft, daß mit der angegebenen Steuerung der Wunsch einer Funksende-/Funkempfangseinrichtung nach einem Kanalwechsel einer anderen Funksende-/Funkempfangseinrichtung signalisiert werden kann.

Weitere vorteilhafte Weiterbildungen der Erfindung sind in übrigen den Unteransprüchen angegeben.

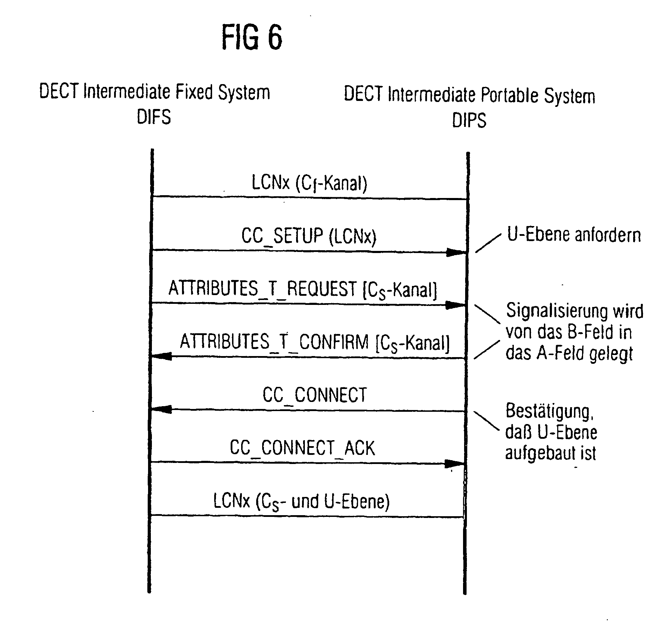

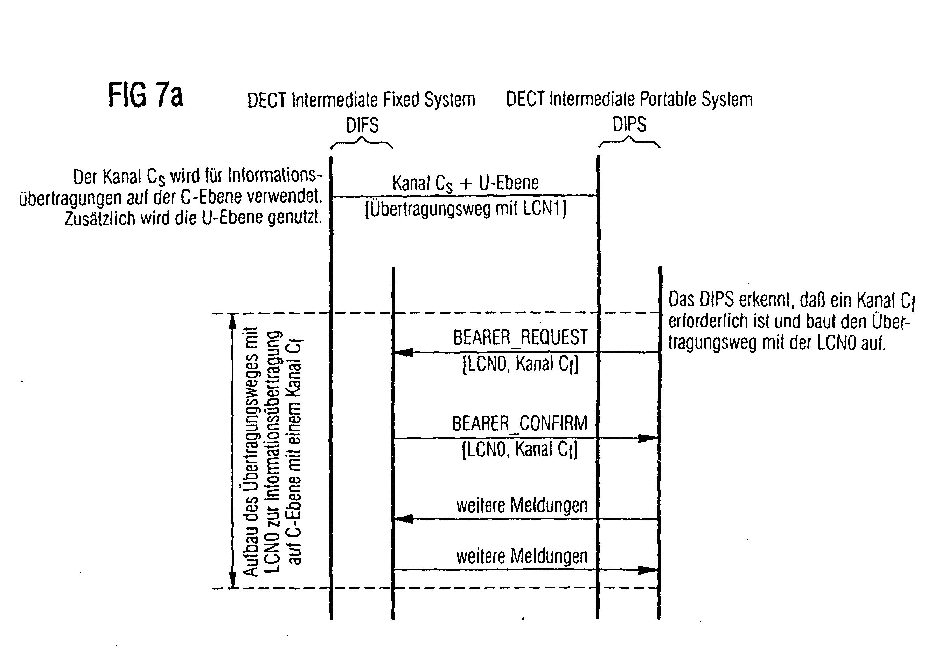

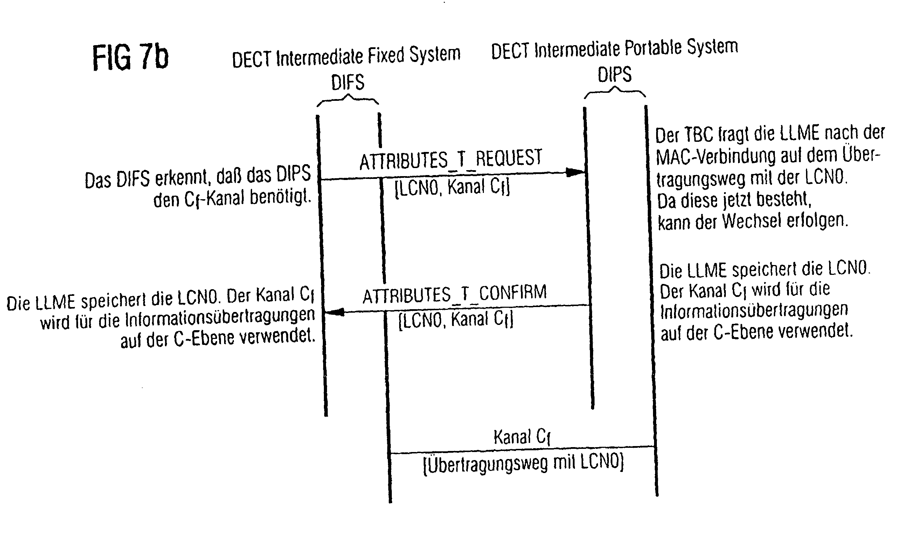

Ein erstes Ausführungsbeispiel der Erfindung wird anhand der FIGUREN 6 und 7 erläutert.

FIGUR 6 zeigt ein Anreiz-Zustands-Diagramm, wie durch Steuerung der Übertragswegnummern ein Kanalwechsel vom C_{f}-Kanal zum Cₛ-Kanal bei minimalen Aufwand an Übertragungswegen (Einsparung von Ressourcen der Luftschnittstelle) erreicht werden kann.

Die erste Telekommunikationsschnittstelle DIFS (Funksende-/Funkempfangseinrichtung) ist auf einem ersten Übertragüngsweg mit einer ersten Übertragungswegnummer LCNx (Logical Connection Number; Kennung) durch den ersten Übertragungskanal C_{f} mit der zweiten Telekommunikationsschnittstelle DIPS (Funksende-/Funkempfangseinrichtung) verbunden. Mit einer ersten NWK-Meldung "CC -SETUP" (vgl. ETSI-Publikation ETS 300175-5, Oktober 1992, Kap. 6.3.2.1) und der ersten Übertragungswegnummer LCNx fordert die erste Telekommunikationsschnittstelle DIFS bei der zweiten Telekommunikationsschnittstelle DIPS die U-Ebene an.

Durch eine erste MAC-Meldung "ATTRIBUTES_T._REQUEST" und eine zweite MAC-Meldung "ATTRIBUTES_T._CONFIRM" (vgl. ETSI-Publikation ETS 300175-3, Oktober 1992, Kap. 7.2.5.3.8) wird die Signalisierung von das DECT-B-Feld in das DECT-A-Feld gelegt. Dies ist gleichbedeutend mit dem Wechsel von dem C_{f}-Kanal zum Cₛ-Kanal. Anschließend bestätigen die Telekommunikationsschnittstellen DIFS, DIPS sich mit einer zweiten NWK-Meldung "CC-CONNECT" (vgl. ETSI-Publikation ETS 300175-5, Oktober 1992, Kap. 6.3.2.6) und einer dritten NWK-Meldung "CC-CONNECT_ACKNOWLEDGE" (vgl. ETSI-Publikation ETS 300175-5, Oktober 1992, Kap. 6.3.2.7) gegenseitig, daß die U-Ebene und der Cₛ-Kanal mit der ersten Übertragungswegnummer LCNx aufgebaut sind. Bisher war für einen derartigen Kanalwechsel der Aufbau von zwei Übertragungswegen erforderlich.

FIGUR 7 zeigt ein weiteres Anreiz-Zustands-Diagramm, wie durch Steuerung der Übertragswegnummern ein von der zweiten Telekommunikationsschnittstelle DIPS (Funksende-/Funkempfangseinrichtung) gewünschter Kanalwechsel der ersten Telekommunikationsschnittstelle DIFS (Funksende-/Funkempfangseinrichtung) signalisiert werden kann und diese den Kanalwechsel dann anstößt und zusammen mit der zweiten Telekommunikationsschnittstelle DIPS durchführt.

Der zweite Übertragungskanal Cₛ wird für die Nachrichtenübertragung auf der C-Ebene verwendet. Darüber hinaus wird die U-Ebene genutzt. Ein Übertragungsweg mit einer Übertragungswegnummer LCN (Kennung) zur Nutzung des ersten Übertragungskanal C_{f} ist noch nicht aufgebaut. Der zweite Übertragungskanal Cₛ hat eine kleinere Übertragungskapazität als der erste Übertragungskanal C_{f}.

Die zweite Telekommunikationsschnittstelle DIPS erkennt, daß der erste Übertragungskanal C_{f} notwendig ist. Da aber noch kein Übertragungsweg mit der Kennung LCN, z.B. der Kennung LCN0, für den ersten Übertragungskanal C_{f} besteht, wird dieser von ihr aufgebaut.

Die Wahl der Kennung LCN - im vorliegenden Fall der LCN0 -als Kennung für den aufzubauenden Übertragungsweg erfolgt nicht willkürlich, sondern wiederum gezielt nach einem vorgegebenen Auswahlkriterium. Dieses Kriterium besteht ganz allgemein formuliert darin, daß als Kennung LCN die Kennung der möglichen Kennungen LCN0, LCN1, LCN2 herangezogen wird, die noch nicht für einen anderen Übertragungsweg benutzt wird, also frei ist.

Alternativ zu dem vorstehend genannten Auswahlkriterium ist es auch möglich, spezielle Ausprägungen des Auswahlkriteriums für die Kennungsvergabe heranzuziehen. So kann z.B. - wie im vorliegenden Fall - immer die kleinste freie Kennung der Kennungen LCN0, LCN1, LCN2 oder die größte freie Kennung der Kennungen LCN0, LCN1, LCN2 herangezogen werden.

Für den Aufbau des Übertragungsweges sendet die zweite Telekommunikationsschnittstelle DIPS, die gemäß der ETSI-Publikation ETS 300175-3, Oktober 1992, Kap. 10.5.1.2 und 10.5.1.3 vorzugsweise für den Aufbau eines Übertragungsweges verantwortlich ist, der ersten Telekommunikationsschnittstelle DIFS eine DECT-spezifische erste B-Feld-Meldung "BEARER_REQUEST" (vgl. ETSI-Publikation ETS 300175-3, Oktober 1992, Kap. 7.3.3.2) als Kommando (COMMAND).

Die erste Telekommunikationsschnittstelle DIFS sendet daraufhin nach Erhalt der ersten B-Feld-Meldung eine DECT-spezifische zweite B-Feld-Meldung "BEARER_CONFIRM" (vgl. ETSI-Publikation ETS 300175-3, Oktober 1992, Kap. 7.3.3.3) als Antwort (RESPONSE) zu der zweiten Telekommunikationsschnittstelle DIPS. In diesem Zustand, also nach Erhalt der zweiten B-Feld-Meldung durch die zweite Telekommunikationsschnittstelle DIPS, ist der weitere Übertragungsweg hergestellt (vgl. ETSI-Publikation ETS 300175-3, Oktober 1992, Kap. 10.5.1.1 bis 10.5.1.3).

Dies von der ersten Telekommunikationsschnittstelle DIFS erkannt, sodaß diese die erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS sendet.

Die zweite Telekommunikationsschnittstelle DIPS bestätigt die erste MAC-Meldung "ATTRIBUTES_T._REQUEST", indem sie die zweite MAC-Meldung "ATTRIBUTES_T._CONFIRM" zur ersten Telekommunikationsschnittstelle DIFS sendet. Danach wird der erste Übertragungskanal C_{f} für die Nachrichtenübertragung auf der C-Ebene verwendet.

## Patentansprüche

1. Verfahren zum Steuern des Aufbaus und der Nutzung von Übertragungswegen (Bearer) zwischen Funksende-/Funkempfangseinrichtungen in drahtlosen Telekommunikationssystemen, insbesondere in einem als lokale Nachrichtenübertragungsschleife in einem ISDN-System eingebundenen DECT-spezifischen RLL/WLL-System, bei dem
a) die Übertragungswege zwischen einer ersten Funksende-/Funkempfangseinrichtung (DIFS) und einer zweiten Funksende-/Funkempfangseinrichtung (DIPS) in dem Telekommunikationssystem (DIIS) aufgebaut werden,
b) den Übertragungswegen Übertragungswegnummern (LCNx, LCNy, LCNz, LCN0, LCN1, LCN2) zugeordnet werden,
c) auf den Übertragungwegen in Übertragungskanälen (Cₛ, C_{f}) mit kanalspezifischen Übertragungskapazitäten systemspezifische Systemnachrichten übertragen werden,
**dadurch gekennzeichnet, daß**
d) die Funksende-/Funkempfangseinrichtungen (DIFS, DIPS) einen ersten Übertragungsweg zur Übertragung der Systemnachrichten in einem ersten Übertragungskanal (C_{f}) mit einer ersten kanalspezifischen Übertragungskapazität derart aufbauen, daß dem ersten Übertragungsweg eine erste Übertragungswegnummer (LCNx, LCN0) zugeordnet wird, die noch nicht anderen Übertragungswegen zugeordnet worden ist.

2. Verfahren nach Anspruch 1, **dadurch gekennzeichnet, daß**
die erste Übertragungswegnummer (LCNx, LCN0) für den ersten Übertragungsweg zur Übertragung der Systemnachrichten in dem ersten Übertragungskanal (C_{f}) mit der ersten kanalspezifischen Übertragungskapazität reserviert wird.

3. Verfahren nach Anspruch 2, **dadurch gekennzeichnet, daß**
die Reservierung der ersten Übertragungswegnummer (LCNx, LCN0) für den ersten Übertragungsweg zur Übertragung der Systemnachrichten in dem ersten Übertragungskanal (C_{f}) mit der ersten kanalspezifischen Übertragungskapazität aufgehoben wird und eine zweite Übertragungswegnummer (LCNy, LCNz, LCN1, LCN2) einem zweiten Übertragungsweg zur Übertragung der Systemnachrichten in dem ersten Übertragungskanal (C_{f}) mit der ersten kanalspezifischen Übertragungskapazität zugeordnet und reserviert wird, wenn der erste Übertragungsweg zur Übertragung der Systemnachrichten in einem zweiten Übertragungskanal (Cₛ) mit einer zweiten kanalspezifischen Übertragungskapazität aufgebaut wird.

4. Verfahren nach einem der Ansprüche 1 bis 3, **dadurch gekennzeichnet, daß**
die dem ersten Übertragungsweg zugeordnete erste Übertragungswegnummer (LCNx, LCN0) und die dem zweiten Übertragungsweg zugeordnete zweite Übertragungsnummer (LCNy, LCNz, LCN1, LCN2) die kleinste Übertragungswegnummer der den Übertragungwegen zuordbaren Übertragungsnummern (LCNx, LCNy, LCNz, LCN0, LCN1, LCN2) ist, die noch nicht den anderen Übertragungswegen zugeordnet worden ist.

5. Verfahren nach einem der Ansprüche 1 bis 3, **dadurch gekennzeichnet , daß**
die dem ersten Übertragungsweg zugeordnete erste Übertragungswegnummer (LCNx, LCN0) und die dem zweiten Übertragungsweg zugeordnete zweite Übertragungsnummer (LCNy, LCNz, LCN1, LCN2) die größte Übertragungswegnummer der den Übertragungwegen zuordbaren Übertragungsnummern (LCNx, LCNy, LCNz, LCN0, LCN1, LCN2) ist, die noch nicht den anderen Übertragungswegen zugeordnet worden ist.

6. Verfahren nach einem der Ansprüche 1 bis 5, **dadurch gekennzeichnet, daß**
ein dritter Übertragungsweg mit einer zugeordneten Übertragungsnummern (LCNx, LCNy, LCNz, LCN0, LCN1, LCN2) zur Übertragung der Systemnachrichten in einem zweiten Übertragungskanal (Cₛ) mit einer zweiten kanalspezifischen Übertragungskapazität aufgebaut wird und daß der erste Übertragungsweg mit der ersten Ubertragungswegnummer (LCNx, LCN0) bzw. der zweiten Übertragungswegnummer (LCNy, LCPdz, LCN1, LCN2) aufgebaut wird, mit der eine Funksende-/Funkempfangseinrichtung (DIFS, DIPS) der Funksende-/Funkempfangseinrichtungen (DIFS, DIPS) einer anderen Funksende-/Funkempfangseinrichtung (DIFS, DIPS) signalisiert, die Systemnachrichten auf dem ersten Übertragungsweg in dem ersten Übertragungskanal (C_{f}) mit der ersten kanalspezifischen Übertragungskapazität zu übertragen.

7. Verfahren nach einem der Ansprüche 1 bis 6, **dadurch gekennzeichnet, daß**
das Telekommunikationssystem (DIIS) ein DECT-System ist.

8. Verfahren nach einem der Ansprüche 1 bis 6, **dadurch gekennzeichnet, daß**
das Telekommunikationssystem (DIIS) ein GSM-System ist.

9. Verfahren nach einem der Ansprüche 1 bis 6, **dadurch gekennzeichnet, daß**
das Telekommunikationssystem (DIIS) ein PHS-System, ein WACS-System oder ein PACS-System ist.

10. Verfahren nach einem der Ansprüche 1 bis 6, **dadurch gekennzeichnet, daß**
das Telekommunikationssystem (DIIS) ein "IS-54"-System oder ein PDC-System ist.

11. Verfahren nach einem der Ansprüche 1 bis 6, **dadurch gekennzeichnet, daß**
das Telekommunikationssystem (DIIS) ein CDMA-System, ein TDMA-System, ein FDMA-System oder ein - bezüglich dieser gennannten Übertragungsstandards - hybrides System ist.

12. Verfahren nach Anspruch 7, **dadurch gekennzeichnet, daß**
das Telekommunikationsystem (DIIS) ein DECT-spezifischen RLL/WLL-System ist, das als lokale Nachrichtenübertragungsschleife in einem ISDN-System eingebundenen ist und daß die erste Funksende-/Funkempfangseinrichtung (DIFS) ein **D**ECT **I**NTERMEDIATE **F**IXED **S**YSTEM (DIFS) und die zweite Funksende-/Funkempfangseinrichtung (DIPS) ein **D**ECT **I**NTERMEDIATE **P**ORTABLE **S**YSTEM (DIPS) ist.

13. Verfahren nach Anspruch 7, **dadurch gekennzeichnet, daß**
der erste Übertragungskanal (C_{f}) der C_{f}-Kanal des DECT-Systems ist.

14. Verfahren nach Anspruch 4, **dadurch gekennzeichnet, daß**
der zweite Übertragungskanal (Cₛ) der Cₛ-Kanal des DECT-Systems ist.

15. Verfahren nach Anspruch 7, **dadurch gekennzeichnet, daß**
die Übertragungswegnummern die LC-Nummern (**L**ogical **C**onnection) des DECT-Standards sind.

## Claims

1. Method for controlling the setting up and use of transmission paths (bearers) between radio transmitting/radio receiving devices in wire-free telecommunications systems, in particular in a DECT-specific RLL/WLL system which is included as a local message transmission loop in an ISDN system, in which
a)the transmission paths are set up between a first radio transmitting/radio receiving device (DIFS) and a second radio transmitting/radio receiving device (DIPS) in the telecommunications system (DIIS),
b)the transmission paths are assigned transmission path numbers (LCNx, LCNy, LCNz, LCN0, LCN1, LCN2),
c)system-specific system messages are transmitted on the transmission paths in transmission channels (Cₛ, C_{f}) with channel-specific transmission capacities,
**characterized in that**
d)the radio transmitting/radio receiving devices (DIFS, DIPS) set up a first transmission path for transmitting the system messages in a first transmission channel (C_{f}) with a first channel-specific transmission capacity, in such a manner that the first transmission path is assigned a first transmission path number (LCNx, LCN0) which has not yet been assigned to other transmission paths.

2. Method according to Claim 1, **characterized in that**
the first transmission path number (LCNx, LCN0) is reserved for the first transmission path, for transmitting the system messages in the first transmission channel (C_{f}) with the first channel-specific transmission capacity.

3. Method according to Claim 2, **characterized in that**
the reservation of the first transmission path number (LCNx, LCN0) for the first transmission path for transmitting the system messages in the first transmission channel (C_{f}) with the first channel-specific transmission capacity is cancelled, and a second transmission path number (LCNy, LCNz, LCN1, LCN2) is assigned to and reserved for a second transmission path for transmitting the system messages in the first transmission channel (C_{f}) with the first channel-specific transmission capacity if the first transmission path has been set up for transmitting the system messages in a second transmission channel (Cₛ) with a second channel-specific transmission capacity.

4. Method according to one of Claims 1 to 3, **characterized in that**
the first transmission path number (LCNx, LCN0) which is assigned to the first transmission path, and the second transmission path number (LCNy, LCNz, LCN1, LCN2), which is assigned to the second transmission path, are the lowest transmission path numbers of the transmission path numbers (LCNx, LCNy, LCNz, LCN0, LCN1, LCN2) which can be assigned to the transmission paths and have not yet been assigned to the other transmission paths.

5. Method according to one of Claims 1 to 3, **characterized in that**
the first transmission path number (LCNx, LCN0) which is assigned to the first transmission path, and the second transmission path number (LCNy, LCNz, LCN1, LCN2), which is assigned to the second transmission path, are the highest transmission path numbers of the transmission path numbers (LCNx, LCNy, LCNz, LCN0, LCN1, LCN2) which can be assigned to the transmission paths and have not yet been assigned to the other transmission paths.

6. Method according to one of Claims 1 to 5, **characterized in that**
a third transmission path having an associated transmission path number (LCNx, LCNy, LCNz, LCN0, LCN1, LCN2) is set up for transmitting the system messages in a second transmission channel (Cₛ) with a second channel-specific transmission capacity, and **in that** the first transmission path is set up with the first transmission path number (LCNx, LCN0) or the second transmission path number (LCNy, LCNz, LCN1, LCN2), by means of which a radio transmitting/radio receiving device (DIFS, DIPS) of the radio transmitting/radio receiving devices (DIFS, DIPS) signals to another radio transmitting/radio receiving device (DIFS, DIPS) to transmit system messages on the first transmission path in the first transmission channel (C_{f}) with the first channel-specific transmission capacity.

7. Method according to one of Claims 1 to 6, **characterized in that**
the telecommunications system (DIIS) is a DECT system.

8. Method according to one of Claims 1 to 6, **characterized in that**
the telecommunications system (DIIS) is a GSM system.

9. Method according to one of Claims 1 to 6, **characterized in that**
the telecommunications system (DIIS) is a PHS system, a WACS system or a PACS system.

10. Method according to one of Claims 1 to 6, **characterized in that**
the telecommunications system (DIIS) is an "IS-54" system or a PDC system.

11. Method according to one of Claims 1 to 6, **characterized in that**
the telecommunications system (DIIS) is a CDMA system, a TDMA system, an FDMA system or a - with respect to these said transmission standards - hybrid system.

12. Method according to Claim 7, **characterized in that**
the telecommunications system (DIIS) is a DECT-specific RLL/WLL system which is included as a local message transmission loop in an ISDN system, and **in that** the first radio transmitting/radio receiving device (DIFS) is a DECT INTERMEDIATE FIXED SYSTEM (DIFS) and the second radio transmitting/radio receiving device (DIPS) is a DECT INTERMEDIATE PORTABLE SYSTEM (DIPS).

13. Method according to Claim 7, **characterized in that**
the first transmission channel (C_{f}) is the C_{f} channel of the DECT system.

14. Method according to Claim 4, **characterized in that**
the second transmission channel (Cₛ) is the Cₛ channel of the DECT system.

15. Method according to Claim 7, **characterized in that**
the transmission path numbers are the LC numbers (Logical Connection) of the DECT standard.

## Revendications

1. Procédé de commande de l'établissement et de l'exploitation de voies de transmission (bearer) entre dispositifs radio émetteurs / radio récepteurs dans des systèmes de télécommunications sans fil, notamment dans un système RLL/WLL spécifique au DECT et intégré dans un système RNIS sous la forme d'une boucle locale de transmission d'informations, dans lequel
a) il est procédé à l'établissement des voies de transmission entre un premier dispositif radio émetteur / radio récepteur (DIFS) et un deuxième dispositif radio émetteur / radio récepteur (DIPS) dans un système de télécommunications (DIIS);
b) des numéros de voies de transmission (LCNx, LCNy, LCNz, LCN0, LCN1, LCN2) sont affectés aux voies de transmission;
c) des messages système spécifiques au système sont transmis sur les voies de transmission dans des canaux de transmission (Cₛ, C_{f}) avec des capacités de transmission spécifiques aux canaux,
**caractérisé en ce que**
d) les dispositifs radio émetteurs / radio récepteurs (DIFS, DIPS) établissent une première voie de transmission pour la transmission des messages système dans un premier canal de transmission (C_{f}) avec une première capacité de transmission spécifique au canal de manière telle qu'est affecté à la première voie de transmission un premier numéro de voie de transmission (LCNx, LCN0) qui n'a pas encore été affecté à d'autres voies de transmission.

2. Procédé selon la revendication 1, **caractérisé en ce que**
le premier numéro de voie de transmission (LCNx, LCN0) est réservé à la première voie de transmission pour la transmission des messages système dans le premier canal de transmission (C_{f}) avec la première capacité de transmission spécifique au canal.

3. Procédé selon la revendication 2, **caractérisé en ce que**
la réservation du premier numéro de voie de transmission (LCNx, LCN0) pour la première voie de transmission pour la transmission des messages système dans le premier canal de transmission (C_{f}) avec la première capacité de transmission spécifique au canal est annulée et **en ce qu'**un deuxième numéro de voie de transmission (LCNy, LCNz, LCN1, LCN2) est affecté à une deuxième voie de transmission pour la transmission des messages système dans le premier canal de transmission (C_{f}) avec la première capacité de transmission spécifique au canal et est réservé lors de l'établissement de la première voie de transmission pour la transmission des messages système dans un deuxième canal de transmission (Cₛ) avec une deuxième capacité de transmission spécifique au canal.

4. Procédé selon l'une des revendications 1 à 3, **caractérisé en ce que** le premier numéro de voie de transmission (LCNx, LCN0) affecté à la première voie de transmission et le deuxième numéro de voie transmission (LCNy, LCNz, LCN1, LCN2) affecté à la deuxième voie de transmission est le plus petit numéro de voie de transmission des numéros de voies de transmission affectables aux voies de transmission (LCNx, LCNy, LCNz, LCN0, LCN1, LCN2) qui n'a pas encore été affecté aux autres voies de transmission.

5. Procédé selon l'une des revendications 1 à 3, **caractérisé en ce que** le premier numéro de voie de transmission (LCNx, LCN0) affecté à la première voie de transmission et le deuxième numéro de voie transmission (LCNy, LCNz, LCN1, LCN2) affecté à la deuxième voie de transmission est le plus grand numéro de voie de transmission des numéros de voies de transmission affectables aux voies de transmission (LCNx, LCNy, LCNz, LCN0, LCN1, LCN2) qui n'a pas encore été affecté aux autres voies de transmission.

6. Procédé selon l'une des revendications 1 à 5, **caractérisé en ce**
**qu'**il est procédé à l'établissement d'une troisième voie de transmission avec un numéro de voie de transmission affecté (LCNx, LCNy, LCNz, LCN0, LCN1, LCN2) pour la transmission de messages système dans un deuxième canal de transmission (Cₛ) avec une deuxième capacité de transmission spécifique au canal et en ce qu'il est procédé à l'établissement de la première voie de transmission avec le premier numéro de voie de transmission (LCNx, LCN0) resp. le deuxième numéro de voie de transmission (LCNy, LCNz, LCN1, LCN2) avec lequel un dispositif radio émetteur / radio récepteur (DIFS, DIPS) des dispositifs radio émetteurs / radio récepteurs (DIFS, DIPS) signale à un autre dispositif radio émetteur / radio récepteur (DIFS, DIPS) qu'il faut transmettre les messages système sur la première voie de transmission dans le premier canal de transmission (C_{f}) avec la première capacité de transmission spécifique au canal.

7. Procédé selon l'une des revendications 1 à 6, **caractérisé en ce que**
le système de télécommunications (DIIS) est un système DECT.

8. Procédé selon l'une des revendications 1 à 6, **caractérisé en ce que**
le système de télécommunications (DIIS) est un système GSM.

9. Procédé selon l'une des revendications 1 à 6, **caractérisé en ce que**
le système de télécommunications (DIIS) est un système PHS, un système WACS ou un système PACS.

10. Procédé selon l'une des revendications 1 à 6, **caractérisé en ce que**
le système de télécommunications (DIIS) est un système «IS-54» ou un système PDC.

11. Procédé selon l'une des revendications 1 à 6, **caractérisé en ce que**
le système de télécommunications (DIIS) est un système CDMA, un système TDMA, un système FDMA ou un système hybride par rapport auxdites normes de transmission.

12. Procédé selon la revendication 7, **caractérisé en ce que**
le système de télécommunications (DIIS) est un système RLL/WLL spécifique au DECT, lequel est intégré dans un système RNIS sous la forme d'une boucle locale de transmission de messages et **en ce que** le premier dispositif radio émetteur / radio récepteur (DIFS) est un **D**ECT **I**NTERMEDIATE **F**IXED **S**YSTEM (DIFS) et le deuxième dispositif radio émetteur / radio récepteur (DIPS) est un **D**ECT **I**NTERMEDIATE **P**ORTABLE **S**YSTEM (DIPS).

13. Procédé selon la revendication 7, **caractérisé en ce que**
le premier canal de transmission (C_{f}) est le canal C_{f} du système DECT.

14. Procédé selon la revendication 4, **caractérisé en ce que**
le deuxième canal de transmission (Cₛ) est le canal Cₛ du système DECT.

15. Procédé selon la revendication 7, **caractérisé en ce que**
les numéros de voies de transmission sont les numéros LC (Logical Connection) de la norme DECT.
